# EUROPEAN PATENT SPECIFICATION

(11) **EP 1 475 598 B1**
(45) Date of publication and mention of the grant of the patent: **22.10.2008**
(21) Application number: 04009965.7
(22) Date of filing: 27.04.2004
(51) Int. Cl.: F28F 19/06, F28F 21/08

(54) **Heat exchange tube**
Wärmetauschrohr
Tube d'échange de chaleur

(30) Priority: 06.05.2003 JP 2003128170
(43) Date of publication of application: 10.11.2004
(73) Proprietor: MITSUBISHI ALUMINUM CO.,LTD., Tokyo (JP)
(72) Inventor: Katsumata, Masaya, 85, Hiramatsu Susono-shi Shizuoka-ken (JP); Hyogo, Yasunori, 85, Hiramatsu Susono-shi Shizuoka-ken (JP); Watanabe, Akira, 85, Hiramatsu Susono-shi Shizuoka-ken (JP)
(74) Representative: HOFFMANN EITLE

(56) References cited:
- EP-A- 1 287 934
- EP-A- 1 533 070
- WO-A-00/38874
- US-A- 4 991 647
- US-B1- 6 234 377

## Description

### BACKGROUND OF THE INVENTION

### 1. Field of the Invention

The present invention relates to a heat exchanger tube and, more particularly, relates to a heat exchanger tube having high corrosion resistance.

Priority is claimed on Japanese Patent Application No. 2003-128170, filed May 6, 2003.

### 2. Description of the Related Art

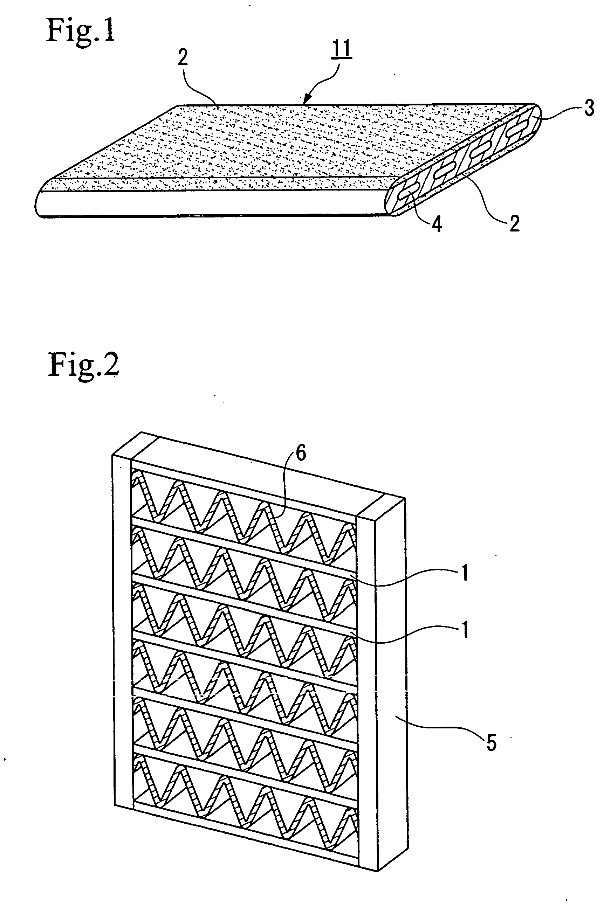

As shown in Fig. 2, a heat exchanger generally comprises a pair of right and left pipe bodies called header pipes 5, a multitude of tubes 1 made of an aluminum alloy installed in parallel at intervals from each other between the header pipes 5, and fins 6 installed between the tubes 1, 1. The inner space of each of the tubes 1 and the inner space of the header pipes 5 communicate with each other, so as to circulate a medium through the inner space of the header pipes 5 and the inner space of each of the tubes 1, thereby achieving efficient heat exchange via the fins 6.

It is known to constitute the tubes 1 of the heat exchanger from heat exchanger tubes 11 made by coating the surface of an A1 alloy extruded tube 3, that has flattened cross section and a plurality of holes 4 for passing the medium as shown in perspective view of Fig. 1, with a flux containing a brazing material powder so as to form a flux layer 2. It is also known to make the Al alloy extruded tube 3 from material (JIS1050) that has high workability for extrusion forming process, and to use a Si powder, an Al-Si alloy powder or an Al-Si-Zn alloy powder as the brazing material contained in the flux layer 2.

A heat exchanger is manufactured using the conventional heat exchanger tube 11 described above in a process such as: the heat exchanger tubes 11 are installed at right angles to the header pipes 5 that are disposed in parallel at a distance from each other, ends of the heat exchanger tubes 11 are inserted into openings (not shown) that are provided in the side face of the header pipe 5, the fins 6 having corrugated shape are assembled between the heat exchanger tubes 11, and the assembly is heated in a heating furnace so that the header pipes 5 and the tubes 1 are fastened to each other by brazing with the brazing material provided on the heat exchanger tube 11 while the fins 6 of corrugated shape are fastened between the tubes 1, 1 by brazing.

Wall thickness of the tube 1 that constitutes the heat exchanger is made smaller than that of the header pipe 5 in order to achieve high efficiency of heat exchange. As a result, in the case in which the tube and the header pipe are corroded at comparable rates, it is likely that a penetrating hole will be formed by corrosion first in the tube thereby allowing the medium to leak therethrough. Thus, it has been a major concern in the heat exchanger to prevent corrosion of the tubes.

In order to improve the corrosion resistance of the heat exchanger tube 11, a sacrificial anode layer containing Zn as a major component is formed on the surface of the tubes in the conventional heat exchangers. As the process to form the sacrificial anode layer, such processes are known as thermal spraying of Zn and coating with a Zn-containing flux. Japanese Patent Application Unexamined Publication No. 7-227695 discloses an example that employs Zn-containing flux.

However, when forming the sacrificial anode layer by thermal spraying, it is difficult to precisely control the amount of metal applied by thermal spraying, thus leading to such a problem that the sacrificial anode layer cannot be formed uniformly on the tube surface, and the corrosion resistance of the tube cannot be improved.

When the Zn-containing flux described in Japanese Patent Application Unexamined Publication No. 7-227695 as mentioned above is used, it may be believed that corrosion resistance of the tube can be improved since the flux and Zn are supplied simultaneously onto the tube surface. In actuality, however, it is difficult to achieve a stable coating condition with ordinary coating methods such as immersion coating and roll coating, and therefore it has been difficult to uniformly apply the Zn-containing flux. As a result, Zn distribution in the sacrificial anode layer becomes uneven, thus leading to insufficient corrosion resistance of the tubes with preferential corrosion occurring in a portion that has higher concentration of Zn.

WO 00/38874 discloses a composition for soldering which comprises a solder, a fluxing agent and a binder. The solder may be silicon powder. The fluxing agent may be an alkali metal fluoride and/or zinc fluoride. The solder, fluxing agent and binder are provided in powder form which preferably has a particle size distribution range of 3-50 µm.

### SUMMARY OF THE INVENTION

The present invention, which has been completed in view of the background described above, has an object of providing a heat exchanger tube that has higher corrosion resistance.

In order to achieve the object described above, the present invention employs the following constitution.

The heat exchanger tube of the present invention comprises an Al alloy extruded tube having a uniformly distributed flux layer containing a Si powder and a Zn-containing flux formed on the external surface thereof, wherein an amount of the Si powder applied to the Al alloy extruded tube is not less than 1 g/m² and not more than 5 g/m², and an amount of the Zn-containing flux applied to the Al alloy extruded tube is not less than 5 g/m² and not more than 20 g/m².

The Zn-containing flux contains at least one Zn compound selected from ZnF₂, ZnCl₂ and KZnF₃.

When such a heat exchanger tube is used, since a mixture of the Si powder and the Zn-containing flux is applied, the Si powder melts and turns into a brazing liquid during a brazing process, and Zn contained in the flux is diffused uniformly in the brazing liquid and is distributed uniformly over the tube surface. Since the diffusion velocity of Zn in a liquid phase such as the brazing liquid is significantly higher than the diffusion velocity in the solid phase, Zn concentration in the tube surface becomes substantially uniform, thus making it possible to form a uniform sacrificial anode layer and improve the corrosion resistance of the heat exchanger tube.

The maximum particle size of the Si powder is 30 µm or less. Maximum particle size larger than 30 µm results in an increase in the erosion depth of the tube and is therefore not desirable. When maximum particle size of the Si powder is less than 0.1 µm, Si particles clump, and the erosion depth of the tube increases also in this case. Therefore, the maximum particle size is preferably not less than 0.1 µm.

The Al alloy extruded tube is preferably made of an Al alloy containing Si and Mn, with the balance being Al and inevitable impurities, while a Si content is 0.5% by weight or more and 1.0% by weight or less, and a Mn content is 0.05% by weight or more and 1.2% by weight or less.

### BRIEF DESCRIPTION OF THE DRAWINGS

Fig. 1 is a perspective view of a heat exchanger tube of the prior art.
Fig. 2 is a perspective view of a heat exchanger of the prior art.

### DETAILED DESCRIPTION OF THE INVENTION

Next, preferred embodiments of the present invention will be described in detail.

The heat exchanger tube of the present invention is made by forming the external surface of an Al alloy extruded tube with a flux layer containing a Si powder and a Zn-containing flux.

The Al alloy extruded tube which constitutes the heat exchanger tube is made of an Al alloy containing Si and Mn, with the balance being Al and inevitable impurities, where a Si content is 0.5% by weight or more and 1.0% by weight or less, and a Mn content is 0.05% by weight or more and 1.2% by weight or less.

The reason for restricting the composition of the Al alloy extruded tube will be described below. Si has an effect in that a large amount of Si forms a solid solution in the Al alloy extruded tube, thus resulting in noble potential of the Al alloy extruded tube, and causes preferential corrosion to occur in the header pipes and the fins that are brazed with the tubes when assembling the heat exchanger, thereby suppressing deep pitting corrosion from occurring in the Al alloy extruded tube, while improving the brazing characteristic and forming good joint thereby to improve the strength after brazing. Si content of less than 0.5% cannot achieve the desired effect, and is therefore not desirable. Si content higher than 1.0%, on the other hand, lowers the melting point of the alloy resulting in excessive melting during brazing and poor extrusion forming characteristic, and is not desirable. Therefore, Si concentration in the Al alloy extruded tube is set in a range from 0.5 to 1.0%. More preferable range of Si concentration is from 0.6% to 0.8%.

Mn has the effect of turning the Al alloy extruded tube to noble potential and, because of less likelihood of diffusing in the brazing material, allows higher potential difference with the fin or the header pipe so as to make the corrosion preventing effect of the fin or the header pipe more effective, thereby improving the external corrosion resistance and the strength after brazing. Mn content of less than 0.05% cannot achieve sufficient effect of turning the Al alloy extruded tube to noble potential, and is therefore not desirable. Mn content higher than 1.2%, on the other hand, results in poor extrusion forming characteristic, and is not desirable.

Therefore, Mn concentration in the Al alloy extruded tube is set in a range from 0.05 to 1.2%.

The flux layer formed on the tube surface contains the Zn-containing flux and the Si powder, so that a molten brazing material layer is formed over the entire surface of the tube after brazing. Since the brazing material layer contains Zn uniformly distributed therein, the brazing material layer has similar effect as that of the sacrificial anode layer so that the brazing material layer is subject to preferential planar corrosion. Therefore deep pitting corrosion can be suppressed and corrosion resistance can be improved.

The amount of a Si powder applied to the heat exchanger tube is preferably not less than 1 g/m² and not more than 5 g/m². When the amount is less than 1 g/m², sufficient brazing strength cannot be achieved because of insufficient amount of the brazing material, and sufficient diffusion of Zn cannot be achieved. When the amount is more than 5 g/m², Si concentration in the tube surface increases and the rate of corrosion increases, and is therefore not desirable.

The flux layer contains at least the Zn-containing flux. In addition to the Zn-containing flux, a flux which does not contain Zn may also be contained.

The Zn-containing flux contains at least one Zn compound selected from ZnF₂, ZnCl₂ and KZnF₃. The flux which does not contain Zn preferably contains at least one fluoride such as LiF, KF, CaF₂, AlF₃ or SiF₄ or a complex compound of the fluoride such as KAlF₄ or KAlF₃.

As the Zn-containing flux is contained in the flux layer of the heat exchanger tube, a Zn-diffused layer (brazing material layer) is formed on the tube surface after brazing, so that the Zn-diffused layer functions as a sacrificial anode layer, thereby improving the anti-corrosion effect of the tube.

Also, because a mixture of the Si powder and the Zn-containing flux is applied, the Si powder melts and turns into a brazing liquid during a brazing process, Zn contained in the flux is diffused uniformly in the brazing liquid and is distributed uniformly over the tube surface. Since diffusion velocity of Zn in a liquid phase such as the brazing liquid is significantly faster than the diffusion velocity in a solid phase, Zn concentration in the tube surface becomes substantially uniform, thus making it possible to form a uniform Zn-diffused layer and improve the corrosion resistance of the heat exchanger tube.

The amount of the Zn-containing flux applied to the heat exchanger tube is not less than 5 g/m² and not more than 20 g/m². An amount of less than 5 g/m² results in insufficient formation of a Zn-diffused layer that does not have sufficient anti-corrosion effect, and is therefore not desirable. An amount of more than 20 g/m² causes excessive Zn to be concentrated in a fillet that is the joint of the fin with other components which results in higher rate of corrosion in the joint, and is therefore not desirable.

The heat exchanger can be constituted by brazing the heat exchanger header pipes and the fins to the heat exchanger tube described above.

That is, the heat exchanger is constituted from the heat exchanger tube of the present invention, the heat exchanger header pipes and the fins that are joined with each other. Similarly to the heat exchanger described in conjunction with the prior art, the heat exchanger comprises a pair of right and left pipe bodies called "heat exchanger header pipes", a plurality of heat exchanger tubes installed in parallel at intervals from each other between the heat exchanger header pipes, and fins installed between the heat exchanger tubes. The inner space of the heat exchanger tube and the inner space of the heat exchanger header pipe are communicated with each other, so as to circulate a medium through the inner space of the heat exchanger header pipe and the inner space of the heat exchanger tube, thereby to achieve efficient heat exchange via the fins.

### Examples

Al alloy extruded tubes having 10 cooling medium passing holes and cross section measuring 20 mm in width, 2 mm in height and wall thickness of 0.20 mm were produced, by extrusion forming of billets made of an Al alloy containing 0.7% by weight of Si and 0.5% by weight of Mn.

Then a flux mixture was prepared by mixing the Zn-containing flux to Si powder. The flux mixture was applied by spraying onto the outer surface of the Al alloy extruded tube that was produced in advance, thereby forming a flux layer. The amounts of the Si powder and the flux mixture applied to the Al alloy extruded tube are shown in Table 1. Thus the heat exchanger tubes of Examples 1 to 6 and Comparative Examples 1 to 4 were produced.

Then fins made of cladding material (JIS3003 or JIS3003/JIS4045) were assembled on the heat exchanger tubes of Examples 1 to 6 and Comparative Examples 1 to 4, and the assemblies were kept at 600°C in a nitrogen atmosphere for three minutes so as to carry out brazing. The tubes with the fins brazed thereon were subjected to corrosion tests (SWAAT, 20 days) to measure the maximum corrosion depth of the tubes. The test results are shown in Table 1.

**Table 1**

| | Si powder | | Flux | | Fin | Maximum corrosion depth (µm) | Remark |
|---|---|---|---|---|---|---|---|
| | Amount of coating (g/m²) | Maximum particle size (µm) | Composition | Amount of coating (g/m²) | | | |
| Example 1 | 1 | 10 | KZnF₃ | 5 | JIS3003 | 75 | - |
| Example 2 | 3 | 10 | KZnF₃ | 10 | JIS3003 | 70 | - |
| Example 3 | 5 | 10 | KZnF₃ | 15 | JIS3003 | 80 | - |
| Example 4 | 5 | 10 | KZnF₃ | 20 | JIS3003 | 75 | - |
| Example 5 | 3 | 10 | ZnCl₂ + KAlF₄ | 10 + 10 | JIS3003 | 95 | - |
| Example 6* | 3 | 35 | KZnF₃ | 10 | JIS3003 | 80 | somewhat deep erosion |
| Comparative Example 1 | 3 | 10 | KAlF₄ | 10 | JIS3003 | 350 | - |
| Comparative Example 2 | 3 | 10 | KZnF₃ + KAlF₄ | 2 + 10 | JIS3003 | 300 | - |
| Comparative Example 3 | | - | - | ZnF₂ | 10 | JIS3003 /JIS4045 | 175 |
| Comparative Example 4 | | - | - | KZnF₃ | 20 | JIS3003 /JIS4045 | 200 |

| | | | | | | | |
|---|---|---|---|---|---|---|---|
| * denotes reference example | | | | | | | |

As shown in Table 1, maximum corrosion depth was less than 100 µm in any of the finned tubes of Examples 1 to 6, indicating that corrosion of the tubes was suppressed. Example 6 showed a little deeper erosion because of larger maximum particle size of the Si powder.

Extent of corrosion was larger in the comparative examples, presumably because Zn was not added to the flux in Comparative Example 1, smaller amount (2 g/m²) of the Zn-containing flux (KZnF₃) was added in Comparative Example 2, and Zn was distributed unevenly since Si powder was not added in the comparative examples 3 and 4.

As described in detail above, in the heat exchanger tube of the present invention, since the mixture of the Si powder and the Zn-containing flux is applied, the Si powder melts and turns into a brazing liquid during a brazing process, while Zn contained in the flux is diffused uniformly in the brazing liquid and is distributed uniformly over the tube surface. Since diffusion velocity of Zn in a liquid phase such as the brazing liquid is significantly higher than diffusion velocity in a solid phase, Zn concentration in the tube surface becomes substantially uniform, thus making it possible to form a uniform sacrificial anode layer and improve the corrosion resistance of the heat exchanger tube.

Since the amount of the Zn-containing flux is in a range not less than 5 g/m² and not more than 20 g/m², Zn can be distributed uniformly over the tube surface.

## Claims

1. A heat exchanger tube comprising an Al alloy extruded tube having a uniformly distributed flux layer containing a Si powder and a Zn-containing flux on an external surface thereof, wherein
the maximum particle size of the Si powder is 30µm or smaller, the amount of the Si powder applied to the Al alloy extruded tube is not less than 1 g/m² and not more than 5 g/m², the Zn-containing flux contains at least one Zn compound selected from ZnF_{2,} ZnCl₂, and KZnF₃, and the amount of Zn-containing flux applied to the Al alloy extruded tube is not less than 5 g/m² and not more than 20 g/m².

2. The heat exchanger tube according to claim 1, wherein the Al alloy extruded tube contains 0.5 % by weight or more and 1.0 % by weight or less Si, 0.05 % by weight or more and 1.2 % by weight or less Mn, with the balance being Al and inevitable impurities.

## Patentansprüche

1. Wärmeaustauscherrohr, das ein extrudiertes Rohr aus einer Al-Legierung mit einer einheitlich verteilten Flußmittelschicht umfaßt, die ein Si-Pulver und ein Zn-haltiges Flußmittel auf ihrer externen Oberfläche enthält, worin
die maximale Teilchengröße des Si-Pulvers 30 µm oder kleiner ist, die Menge des auf das extrudierte Rohr aus einer Al-Legierung aufgebrachten Si-Pulvers nicht weniger als 1 g/m² und nicht mehr als 5 g/m² ist, das Zn-haltige Flußmittel zumindest eine Zn-Verbindung enthält, die aus ZnF₂, ZnCl₂ und KZnF₃ ausgewählt wird, und die Menge des auf das extrudierte Rohr aus einer Al-Legierung aufgebrachten Zn-haltigen Flußmittels nicht weniger als 5 g/m² und nicht mehr als 20 g/m² ist.

2. Wärmeaustauscherrohr gemäß Anspruch 1, worin das extrudierte Rohr aus einer Al-Legierung 0,5 Gew.% oder mehr und 1,0 Gew.% oder weniger Si, 0,05 Gew.% oder mehr und 1,2 Gew.% oder weniger Mn enthält, wobei der Rest Al und unvermeidliche Verunreinigungen sind.

## Revendications

1. Tube d'échange de chaleur comprenant un tube extrudé en alliage d'Al ayant une couche de flux à distribution uniforme contenant une poudre de Si et un flux contenant du Zn sur une surface externe de celle-ci, dans lequel
la taille maximale de particules de la poudre de Si est 30 µm ou moins, la quantité de la poudre de Si appliquée au tube extrudé en alliage d'Al n'est pas inférieure à 1g/ m² et non supérieure à 5 g/ m², le flux contenant du Zn contient au moins un composé de Zn sélectionné parmi du ZnF₂, ZnCl₂, et KZnF₃, et la quantité du flux contenant du Zn appliquée au tube extrudé en alliage d'Al n'est pas inférieure à 5 g/ m² et non supérieure à 20 g/ m².

2. Tube d'échange de chaleur selon la revendication 1, dans lequel le tube extrudé en alliage d'Al contient 0,5 % en poids ou plus et 1,0 % en poids ou moins de Si, 0,05 % en poids ou plus et 1,2 % en poids ou moins de Mn, le reste étant de l'Al et des impuretés inévitables.
